# EUROPÄISCHE PATENTSCHRIFT

(11) **EP 0 718 484 B1**
(45) Veröffentlichungstag und Bekanntmachung des Hinweises auf die Patenterteilung: **12.05.1999**
(21) Anmeldenummer: 95119652.6
(22) Anmeldetag: 13.12.1995
(51) Int. Cl.: F02D 19/06

(54) **Anordnung zum Betrieb einer Brennkraftmaschine mit unterschiedlichen Kraftstoffen**
Arrangement for operating an internal combustion engine with different fuels
Dispositif pour le fonctionnement d'un moteur à combustion interne avec combustibles différents

(30) Priorität: 22.12.1994 DE 4446069
(43) Veröffentlichungstag der Anmeldung: 26.06.1996
(73) Patentinhaber: SIEMENS AKTIENGESELLSCHAFT, 80333 München (DE)
(72) Erfinder: Koch, Achim, D-93105 Tegernheim (DE)

(56) Entgegenhaltungen:
- WO-A-92/08888
- US-A- 4 936 280
- US-A- 5 228 423
- PATENT ABSTRACTS OF JAPAN vol. 6, no. 204 (M-164), 15.Oktober 1982 & JP-A-57 110737 (NISSAN JIDOSHA), 9.Juli 1982,

## Beschreibung

Die Erfindung betrifft eine Anordnung für eine für abwechselnden Betrieb mit unterschiedlichen Kraftstoffen ausgelegte Brennkraftmaschine, gemäß dem Oberbegriff des Patentanspruches 1.

Eine derartige Anordnung ist beispielsweise aus der US-A-4 936 280 bekannt.

Der Einsatz alternativer Energien zum Betrieb einer Brennkraftmaschine, insbesondere einer Brennkraftmaschine zum Antrieb eines Kraftfahrzeugs gewinnt im Hinblick auf die begrenzten Rohölreserven und bezüglich der Einhaltung der vom Gesetzgeber vorgeschriebenen, in Zukunft noch niedrigeren Grenzwerte für die Schadstoffemissionen immer mehr an Bedeutung.

Als eine Möglichkeit, herkömmlichen Kraftstoff (Benzin) als Antriebsenergie für Kraftfahrzeuge zumindest teilweise zu ersetzen, hat sich der Gasbetrieb von Kraftfahrzeugen erwiesen.

Von den im Handel erhältlichen Gasarten haben sich hierzu vor allem das Liquified Petroleum Gas (LPG) und das Compressed Natural Gas (CNG) erwiesen.

Da diese Gase frei von Blei- und Schwefelverbindungen sind und sehr gute Verbrennungseigenschaften bei ausgezeichneter Gemischbildung und Gemischverteilung aufweisen, reduzieren sich die Schadstoffemissionen CO, HC, NOₓ und CO₂ gegenüber Kraftfahrzeugen, die mit benzinbetriebenen Brennkraftmaschinen ausgerüstet sind.

Aufgrund des in den meisten Ländern noch nicht flächendeckend ausgebauten Gasversorgungsnetzes scheint eine Kombination von Gasbetrieb und herkömmlichen Benzinbetrieb im KFZ sinnvoll.

Um zusätzlich zum Benzinbetrieb auch den Autogasbetrieb zu ermöglichen, wird in der Regel das standardmäßig mit einer Einrichtung für den Benzinbetrieb ausgerüstete Kraftfahrzeug mit einer Autogasanlage auf bivalenten Betrieb nachgerüstet. Neben den für die Speicherung, Verteilung und Abgabe des Autogases notwendigen Komponenten (u.a. Gastank mit Armaturen, Leitungen, Druckgeber, Einspritzsystem und Gas-Benzin-Umschalter) ist dabei auch eine zusätzliche elektronische Steuerungseinrichtung mit zugehörigen Sensoren und Aktoren notwendig, die den Gasbetrieb steuert.

Darüber hinaus ist es bekannt, Kraftfahrzeuge serienmäßig mit Brennkraftmaschinen zu versehen, die mit verschiedenen Kraftstoffen betrieben werden können.

In der WO 92/08888 ist eine für bivalenten Betrieb mit Benzin und Liquified Petroleum Gas (LPG) als zweiten Kraftstoff ausgelegte Brennkraftmaschine beschrieben. Dieses System weist für jeden der beiden Kraftstoffe separate Vorratsbehälter auf, die jeweils über eigene Versorgungsleitungen mit einer einzigen Kraftstoffverteilerleiste in Verbindung stehen. An dieser Kraftstoffverteilerleiste ist ein einziger Satz von Einspritzventilen angeordnet, sodaß diese Einspritzventile sowohl den Kraftstoff Benzin als auch den Kraftstoff LPG der angesaugten Luft zumessen. Überschüssiger Kraftstoff, der von den Einspritzventilen nicht abgespritzt wird, wird über Rückführleitungen in den jeweiligen Vorratsbehälter zurückgeführt. In Abhängigkeit von der gerade verwendeten Kraftstoffart individuell ansteuerbare elektromagnetische Ventile und selbsttätig wirkende Rückschlagventile sorgen dafür, daß der überschüssige Kraftstoff in den richtigen Vorratsbehälter zurückgeleitet wird. Die bekannte Anordnung weist ferner eine herkömmliche Steuerungseinrichtung u.a. für die Bestimmung der Einspritzzeit bei Benzinbetrieb auf, der eine weitere Steuerungseinrichtung für die Bestimmung der Einspritzzeit bei Gasbetrieb nachgeschaltet ist. Wird die Brennkraftmaschine mit Benzin betrieben, so wird auf übliche Weise abhängig von der Last und der Drehzahl der Brenkraftmaschine die Einspritzzeit berechnet und die Einspritzimpulse werden unverändert durch die nachgeschaltete Steuerungseinrichtung für den Gasbetrieb zu den Einspritzventilen weitergeleitet.

Wird dagegen die Brennkraftmaschine mit Autogas betrieben, so werden die von der elektronischen Steuerungseinrichtung für Benzinbetrieb berechneten Einspritzzeiten in der nachgeschalteten Steuerungseinrichtung für Gasbetrieb korrigiert und erst dann in Form von Einspritzimpulsen an die Einspritzventile weitergegeben, die nun Autogas einspritzen. Eine solche Korrektur der für den Benzinbetrieb berechneten Einspritzzeiten ist notwendig, da zwecks Erzielung eines zündfähigen Kraftstoff-Luftgemisches für die Brennräume der Brennkraftmaschine sowie zwecks Einhaltung eines bestimmten Bereichs des Luftverhältnisses aus Gründen der Begrenzung des Schadstoffanteils im Abgas der Maschine die Eigenschaften des einzuspritzenden Kraftstoffes, nämlich des Autogases berücksichtigt werden müssen.

Durch die Verwendung ein und derselben Einspritzventile für beide Kraftstoffarten ergibt sich zwar eine kostengünstige und raumsparende Lösung, die konstruktive Gestaltung der Ventile kann aber aufgrund der verschiedenen Eigenschaften der einzuspritzenden Kraftstoffe (z.B. unterschiedliche Drücke, Dichte) nur einen Kompromiß darstellen. Darüber hinaus kann es bei Verwendung eines einzigen Satzes von Einspritzventilen für beide Kraftstoffarten zu Problemen während des Überganges von einem Kraftstoff zu dem anderen Kraftstoff kommen. Nachteilig ist ferner, daß für die unterschiedlichen Kraftstoffarten separate Steuerungseinrichtungen notwendig sind.

Der Erfindung liegt die Aufgabe zugrunde, eine Anordnung zum Steuern einer, mit verschiedenen Kraftstoffen betreibbare Brennkraftmaschine anzugeben, wobei sowohl die Umschaltung zwischen den Betriebsweisen mit unterschiedlichen Kraftstoffen auf einfache Weise bei hoher Betriebssicherheit gewährleistet, als auch eine einfache Nachrüstbarkeit eines mit einer solchen Brennkraftmaschine ausgerüsteten Kraftfahrzeuges gegeben ist.

Diese Aufgabe wird gemäß den Merkmalen des Patentanspruches 1 gelöst. Vorteilhafte Ausgestaltungen der Erfindung beschreiben die Unteransprüche.

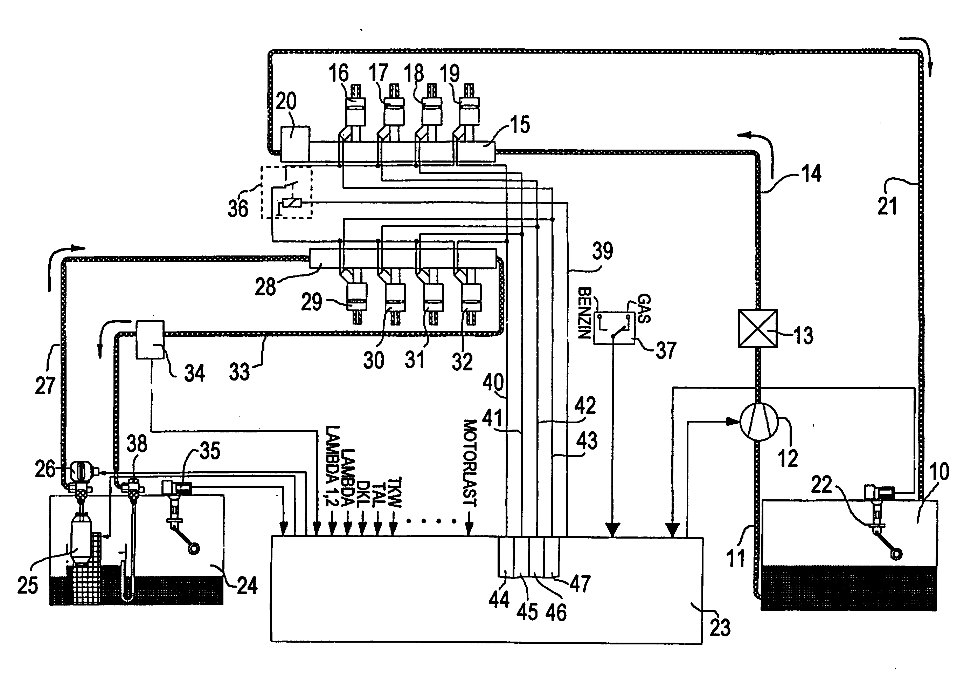

Die Erfindung wird anhand der einzigen Figur näher erläutert.

Diese zeigt schematisch nur diejenigen Teile eines Kraftfahrzeugs und einer Brennkraftmaschine, die für das Verständnis der Erfindung notwendig sind.

Mit dem Bezugszeichen 10 wird ein Bezintank bezeichnet, von dem eine Saugleitung 11 zu einer elektrisch betriebenen Benzinpumpe 12 führt. Diese Elektrokraftstoffpumpe, beispielsweise eine Rollenzellenpumpe, die über ein Signal von einer elektronischen Steuerungseinrichtung 23 aktivierbar ist, kann auch unmittelbar im Benzintank 10 angeordnet sein. Sie erzeugt den notwendigen Einspritzdruck und fördert Benzin über ein Benzinfilter 13 und eine Förderleitung 14 zu einer Verteilerleiste 15 nahe am Ansaugrohr der Brennkraftmaschine. Am Ende der Verteilerleiste 15 ist ein Druckregler 20 angeordnet, der den Differenzdruck über dem Zumeßspalt der Einspritzventile unabhängig von der eingespritzten Kraftstoffmenge konstant hält. Dadurch wird erreicht,daß die eingespritzte Kraftstoffmenge allein durch die Öffnungsdauer des Einspritzventils bestimmt ist. An der Verteilerleiste 15 sind in bekannter Weise entsprechend der Anzahl der Zylinder der Brennkraftmaschine elektromagnetische Einspritzventile 16,17,18,19 angeordnet.

Überschüssiges Benzin, das von den Einspritzventilen nicht abgespritzt wird, gelangt über eine Rückführleitung 21 zurück zum Benzintank 10. Ein Füllstandssensor 22 gibt ein dem Füllstand des Benzintanks 10 entsprechendes Signal zur weiteren Verarbeitung an die elektronische Steuerungseinrichtung 23 ab.

Zusätzlich zum Benzintank 10 ist im Kraftfahrzeug ein Gastank 24 zum Aufnehmen und Speichern von flüssigem Autogas (LPG) vorgesehen. Das unter Druck stehende Flüssiggas wird mittels einer Elektropumpe 25 und ein bei Gasbetrieb der Brennkraftmaschine offenes Absperrventil 26 über eine Förderleitung 27 zu einer Gasverteilerleiste 28 gedrückt. An dieser Verteilerleiste 28 sind ebenfalls der Anzahl der Brennkraftmaschinenzylinder entsprechend elektromagnetische Einspritzventile 29, 30, 31, 32 angeordnet. Durch Öffnen dieser Einspritzventile entspannt sich das verflüssigte Autogas und wird als gasförmiger Kraftstoff in das Ansaugrohr eingespritzt. Überschüssiger Kraftstoff gelangt über eine Rückführleitung 33, einen Druckgeber 34 und ein Rückschlagventil 38 zurück zum Gastank 24.

Ein Füllstandssensor 35 gibt ein dem Füllstand des Gastanks 24 entsprechendes Signal zur weiteren Verarbeitung an die elektronische Steuerungseinrichtung 23 ab. An der elektronischen Steuerungseinrichtung 23 liegen ferner die Ausgänge mehrere Sensoren und Geber an, von denen in der Figur nur einige Ausgangssignale eingezeichnet sind. Es sind dies Signale von Lambdasonden vor und hinter einem Abgaskatalysator Lambda 1, 2, von einem Drosselklappensensor DKL, von Temperatursensoren für Ansaugluft TAL und Kühlmitteltemperatur TKW und von Sensoren für Motorlast (z.B. Luftmasse, Saugrohrdruck, Drehzahl).

Ein im Instrumentenfeld des Kraftfahrzeugs angeordneter Benzin-/Gaswahlschalter 37 ermöglicht die Wahl zwischen Benzin- oder Gasbetrieb der Brennkraftmaschine und ist ebenfalls elektrisch mit der Steuerungseinrichtung 23 verbunden.

Abhängig von der Schaltstellung dieses Benzin-/Gaswahlschalters 37 können entweder die Einspritzventile 16, 17, 18, 19 für Benzinbetrieb oder die Einspritzventile 29, 30 31, 32 für Gasbetrieb aktiviert werden. Die Umschaltung der Spannungsversorgung zwischen den beiden Sätzen von Einspritzventilen erfolgt über einen elektrisch betätigbaren Umschalter 36, der vorzugsweise als Relais mit einem Umschaltglied realisiert ist. Ein Wicklungsende der Relaisspule ist an Masse gelegt, während das weitere Ende über eine Steuerleitung 39 zur elektronischen Steuerungseinrichtung 23 führt und dort mit dem Ausgang des Benzin-/Gaswahlschalters 37 in Verbindung steht. Die Eingangsklemme des Umschaltgliedes des Relais 36 ist an die Klemme 15 (Klemme Ausgang Zünd-Fahrtschalter) angeschlossen, so daß in Abhängigkeit von der Schaltstellung des Benzin-/Gaswahlschalters 37 die Klemme 15 Versorgungsspannung der Einspritzventile entweder an alle Einspritzventile für Gasbetrieb 29, 30, 31, 32 oder an alle Einspritzventile für Benzinbetrieb 16, 17, 18, 19 durchgeschaltet wird.

Die individuelle Ansteuerung der einzelnen Einspritzventile für die mittels des Benzin-/Gaswahlschalters 37 ausgewählten Betriebsart Benzin oder Gas erfolgt über eine Massetaktung von der elektronischen Steuerungseinrichtung 23 aus. Hierzu dienen Ansteuerleitungen 40, 41, 42, 43, wobei jeweils eine Ansteuerleitung sowohl mit einem Anschluß eines Einspritzventiles für Benzinbetrieb und mit einem Anschluß eines Einspritzventiles für Gasbetrieb verbunden ist. Dadurch ergibt sich die Möglichkeit ein und diesselbe Endstufe sowohl für die Ansteuerung eines Einspritzventiles für Benzinbetrieb als auch zur Ansteuerung eines Einspritzventiles für Gasbetrieb zu benutzen. So steuert beispielsweise die Endstufe 44 über die Ansteuerleitung 40 bei Gasbetrieb der Brennkraftmaschine das Einspritzventil 32 an, bei Benzinbetrieb steuert sie dagegen das Einspritzventil 19 an.
So sind trotz der sequentiellen Ansteuermöglichkeit aller acht Einspritzventile nur vier Endstufen nötig.
Eine Umschaltung von Benzin- auf Gasbetrieb oder umgekehrt kann aber nicht nur abhängig vom Fahrerwunsch mittels des Benzin-/Gaswahlschalters eingeleitet werden, sondern kann auch automatisch erfolgen, wenn einer der beiden Tanks 10, 24 einen minimal zulässigen Füllstand erreicht hat. Hierzu werden von der elektronischen Steuerungseinrichtung 23 die Signale der beiden Füllstandssensoren 22, 35 ausgewertet und es wird unabhängig von der momentan eingestellten Schaltstellung des Benzin-/Gaswahlschalters auf den jeweilig anderen Kraftstoff umgeschaltet. Eine anschließende Betätigung des Benzin/Gaswahlschalters 37 hat dann solange keinen Einfluß mehr auf die Wahl der Betriebsart der Brennkraftmaschine, bis der entsprechende Füllstandssensor wieder einen über den minimal zulässigen Füllstand signalisiert.

Da zur Steuerung der abwechselnd mit unterschiedlichen Kraftstoff betreibbaren Brennkraftmaschine eine einzige Steuerungseinrichtung 23 Verwendung findet, müssen aufgrund der verschiedenen Eigenschaften der beiden Kraftstoffarten bei einem Wechsel der Betriebsart nicht nur die Einspritzventile umgeschaltet werden, sondern auch bestimmte Funktionen und/oder Daten in der elektronischen Steuerungseinrichtung 23.

Wird von Benzin- auf Gasbetrieb umgeschaltet, so ist folgendes zu berücksichtigen:
- bei der Startanreicherung sind bei Gasbetrieb aufgrund des nicht oder nur sehr gering vorhandenen Wandfilms kürzere Einspritzzeiten erforderlich,
- bei der Nachstartanreicherung/Warmlaufanreicherung sind beim Gasbetrieb geringere Anreicherungen erforderlich,
- für die Grundkennfelder für die Einspritzzeitberechnung sind aufgrund der konstruktiv anderen Einspritzventile beim Gasbetrieb andere Grunddaten abzuspeichern,
- bei Verwendung von Gas als Kraftstoff sind bei Instationärbetrieb die erforderlichen Anreicherungen/Abmagerungen viel geringer,
- aufgrund anderer Entflammungsbedingungen sind beim Gasbetrieb andere Zündzeitpunkte erforderlich, außerdem hat Gas eine ROZ größer als 100, d.h. bei Vollastbetrieb sind frühere Zündzeitpunkte möglich,
- bei der Lambdaregelung müssen andere Regelparameter herangezogen werden,
- die Tankentlüftung der Benzinanlage muß auch während des Gasbetriebs weiterlaufen, kann jedoch mit verringerter Menge ablaufen, da kein aufgeheiztes Benzin über den Rücklauf von der Benzin-Verteilerleiste kommt,
- bei Gasbetrieb ist keine Vorabeinspritzung nötig.

Außerdem muß beim Umschalten von Benzin- auf Gasbetrieb zunächst die Kraftstoffversorgungspumpe des anderen Tanks zugeschaltet werden, damit der Druck in der Kraftstoffverteilerleiste aufgebaut wird. Dann erst werden die Einspritzventile umgeschaltet. Dabei ist die Lambdaregelung kurzzeitig zu unterbrechen, um durch kurzzeitige Lambdaabweichungen nicht die Regelung zu vertrimmen.

Bei der Umschaltung von Gasbetrieb auf Benzinbetrieb muß der erste Einspritzimpuls bei Benzinbetrieb abhängig vom jeweiligen Motorlastpunkt um eine entsprechende Wandfilmmenge erhöht werden. Dadurch wird ein zu mageres Benzin-Luftgemisch vermieden und eventuell auftretende Motoraussetzer verhindert.

Die Erfindung wurde anhand eines Ausführungsbeispiels beschrieben, bei der neben dem Benzinbetrieb der Gasbetrieb mit Liquified Petroleum Gas (LPG) möglich ist. Ebenso ist aber anstelle des Gasbetriebes mit dem Flüssiggas LPG auch ein bivalenter Betrieb mit Benzin und Compressed Natural Gas (CNG) möglich. Dies erfordert eine andere konstruktive Ausgestaltung der Einspritzventile, die den Gegebenheiten des verwendeten Gas angepaßt werden müssen. Außerdem ist die erfindungsgemäße Anordnung bzw. das Verfahren auch für Brennkraftmaschinen einsetzbar, die jeweils nur ein Einspritzventil (single point injection) für Benzinbetrieb und für Gasbetrieb aufweisen.

## Patentansprüche

1. Anordnung für eine mit abwechselnden Betrieb mit zwei unterschiedlichen Kraftstoffarten betreibbare Brennkraftmaschine, insbesondere zum Antrieb eines Kraftfahrzeugs,
- mit zwei getrennten, den unterschiedlichen Kraftstoffarten zugeordneten Kraftstoffkreisen, wobei jeder Kraftstoffkreis mindestens ein elektrisch ansteuerbares Einspritzventil (16, 17, 18, 19; 29, 30, 31, 32) aufweist,
- mit einer Schalteinrichtung (36, 37) zum Umschalten von einem Kraftstoffkreis auf den anderen Kraftstoffkreis und
- mit einer einzigen elektronischen Steuerungseinrichtung (23), die sowohl den Betrieb der Brennkraftmaschine mit der ersten Kraftstoffart als auch den Betrieb der Brennkraftmaschine mit der zweiten Kraftstoffart steuert,
**dadurch gekennzeichnet,**
daß die elektronische Steuerungseinrichtung (23) einen Leistungsteil mit Endstufen (44, 45, 46, 47) zur Ansteuerung der Einspritzventile aufweist und jeweils einer Endstufe sowohl ein Einspritzventil für die erste Kraftstoffart als auch ein Einspritzventil für die zweite Kraftstoffart zugeordnet ist.

2. Brennkraftmaschine nach Anspruch 1,
**dadurch gekennzeichnet,**
daß die Schalteinrichtung einen Wahlschalter (37) umfaßt, dessen Ausgangssignal einen elektrischen Umschalter (36) betätigt, der die Versorgungsspannung (KL15) zwischen den Einspritzventilen (16, 17, 18, 19) für die erste Kraftstoffart und den Einspritzventilen (29, 30, 31, 32) für die zweite Kraftstoffart umschaltet.

3. Brennkraftmaschine nach Anspruch 2,
**dadurch gekennzeichnet,**
daß als Umschalter ein Relais mit einem Umschaltglied dient.

4. Brennkraftmaschine nach nach einem der Ansprüche 1 bis 3,
**dadurch gekennzeichnet,**
daß als erste Kraftstoffart Benzin und als zweite Kraftstoffart Flüssiggas dient.

5. Brennkraftmaschine nach einem der Ansprüche 1 bis 3,
**dadurch gekennzeichnet,**
daß als erste Kraftstoffart Benzin und als zweite Kraftstoffart Compressed Natural Gas (CNG) dient.

6. Brennkraftmaschine nach Anspruch 1,
**dadurch gekennzeichnet,**
daß die Umschaltung zwischen dem Betrieb mit der ersten Kraftstoffart und der zweiten Kraftstoffart und umgekehrt manuell eingeleitet wird.

7. Verfahren nach Anspruch 1,
**dadurch gekennzeichnet,**
daß die Umschaltung zwischen dem Betrieb mit der ersten Kraftstoffart und der zweiten Kraftstoffart und umgekehrt automatisch erfolgt, wenn der jeweilige Kraftstoffvorrat des einen Kraftstoffes einen minimal zulässigen Wert erreicht hat.

## Claims

1. Arrangement for an internal combustion engine which can operate with a different operating mode with two different types of fuel, in particular for driving a motor vehicle,
- having two separate fuel circuits which are assigned to the different types of fuel, each fuel circuit having at least one electrically driveable injection valve (16, 17, 18, 19; 29, 30, 31, 32),
- having a switching device (36, 37) for switching from one fuel circuit to the other fuel circuit, and
- having a single electronic control device (23) which controls both the operating mode of the internal combustion engine with the first type of fuel and the operating mode of the internal combustion engine with the second type of fuel, characterized in that the electronic control device (23) has a power component with output stages (44, 45, 46., 47) for driving the injection valves, and in each case an output stage is assigned both an injection valve for the first type of fuel and an injection valve for the second type of fuel.

2. Internal combustion engine according to Claim 1, characterized in that the switching device comprises a selector switch (37) whose output signal activates an electrical change-over switch (36) which switches over the supply voltage (KL15) between the injection valves (16, 17, 18, 19) for the first type of fuel and the injection valves (29, 30, 31, 32) for the second type of fuel.

3. Internal combustion engine according to Claim 2, characterized in that a relay with a switch-over element serves as change-over switch.

4. Internal combustion engine according to one of Claims 1 to 3, characterized in that petrol serves as the first type of fuel and liquefied gas as the second type of fuel.

5. Internal combustion engine according to one of Claims 1 to 3, characterized in that fuel serves as the first type of fuel and compressed natural gas (CNG) serves as the second type of fuel.

6. Internal combustion engine according to Claim 1, characterized in that the switching over between the operating mode with the first type of fuel and the operating mode with the second type of fuel, and vice versa, is initiated manually.

7. Method according to Claim 1, characterized in that the switching over between the operating mode with the first type of fuel and the operating mode with the second type of fuel, and vice versa, takes place automatically when the respective supply of fuel of the one fuel has reached a minimum permissible value.

## Revendications

1. Dispositif pour un moteur à combustion interne pouvant être entraîné en fonctionnant en alternance avec deux types de carburant différents, en particulier pour entraîner un véhicule automobile,
- comportant deux circuits de carburant séparés, associés aux types différents de carburant, chaque circuit de carburant présentant au moins une soupape d'injection commandable électriquement (16, 17, 18, 19; 29, 30, 31, 32),
- comportant un dispositif de commutation (36, 37) pour l'inversion d'un circuit de carburant sur l'autre circuit de carburant,
- et comportant un unique dispositif de commande électronique (23) qui commande aussi bien le fonctionnement du moteur à combustion interne avec le premier type de carburant que le fonctionnement du moteur à combustion interne avec le deuxième type de carburant,
caractérisée en ce que le dispositif de commande électronique (23) présente une partie puissance comportant des étages de sortie (44, 45, 46, 47) pour commander les soupapes d'injection et en ce que chaque étage de sortie est associé à la fois à une soupape d'injection pour le premier type de carburant qu'une soupape d'injection pour le deuxième type de carburant.

2. Moteur à combustion interne suivant la revendication 1, caractérisé en ce que le dispositif de commutation comporte un commutateur de sélection (37) dont le signal de sortie actionne un inverseur électrique (36) qui commute la tension d'alimentation (KL15) entre les soupapes d'injection (16, 17, 18, 19) pour le premier type de carburant et les soupapes d'injection (29, 30, 31, 32) pour le deuxième type de carburant.

3. Moteur à combustion interne suivant la revendication 2, caractérisé en ce que, comme inverseur, on utilise un relais comportant un organe d'inversion.

4. Moteur à combustion interne suivant l'une des revendication 1 à 3, caractérisé en ce que l'on utilise de l'essence comme premier type de carburant et du gaz liquéfié comme deuxième type de carburant.

5. Moteur à combustion interne suivant l'une des revendication 1 à 3, caractérisé en ce que l'on utilise de l'essence comme premier type de carburant et du gaz naturel comprimé (CNG) comme deuxième type de carburant.

6. Moteur à combustion interne suivant la revendication 1, caractérisé en ce que l'inversion entre le fonctionnement avec le premier type de carburant et le deuxième type de carburant, et inversement, est lancée manuellement.

7. Procédé suivant la revendication 1, caractérisé en ce que l'inversion entre le fonctionnement avec le premier type de carburant et le deuxième type de carburant, et inversement, se fait automatiquement, chaque fois que la réserve correspondant à l'un des types de carburant a atteint une valeur minimale permise.
